# EUROPÄISCHE PATENTSCHRIFT

(11) **EP 0 939 042 B1**
(45) Veröffentlichungstag und Bekanntmachung des Hinweises auf die Patenterteilung: **28.05.2003**
(21) Anmeldenummer: 99102155.1
(22) Anmeldetag: 03.02.1999
(51) Int. Cl.: B65G 13/06

(54) **Rollenantriebseinheit zum Transport von Frachtbehältern in verschiedene Richtungen**
Roller-drive unit for the conveyance of cargo containers in different directions
Unité d'entraînement à rouleaux pour le transport de conteneurs de fret dans différentes directions

(30) Priorität: 20.02.1998 DE 19807228
(43) Veröffentlichungstag der Anmeldung: 01.09.1999
(73) Patentinhaber: Telair International GmbH, 83734 Hausham (DE)
(72) Erfinder: Huber, Thomas, 82393 Iffeldorf (DE); Dürrwächter, Martin, 83737 Irschenberg (DE); Urch, Matthias, 85586 Poing (DE); Kieser, Benedikt, 83714 Miesbach (DE)
(74) Vertreter: Bohnenberger, Johannes, Dr.

(56) Entgegenhaltungen:
- EP-A- 0 497 045
- EP-A- 0 870 702
- US-A- 5 568 858

## Beschreibung

Die Erfindung betrifft eine Rollenantriebseinheit nach dem Oberbegriff des Patentanspruches 1.

Derartige Rollenantriebseinheiten sind beispielsweise in Rollenförderbahnen zum Transport von Frachtbehältern angeordnet, wobei es sich bei den Frachtbehältern insbesondere um Frachtcontainer oder Frachtpaletten handelt. Die hier vorgeschlagenen Rollenantriebseinheiten werden bevorzugterweise in den Frachtraum von Flugzeugen für den Luftfrachtverkehr so eingebaut, daß sie Rollenförderbahnen bilden, über die die Container bzw. das über Rollen beförderbare Frachtgut in den Frachtraum hineinbefördert und an der vorgesehenen Stelle verstaut wird.

Beim Einschalten derartiger Rollenantriebseinheiten werden die dazugehörigen Rollen derart hochgeschwenkt, daß sie sich an den Boden eines über ihnen befindlichen Frachtcontainers pressen. Durch den Reibschluß wird das Drehmoment der Antriebsrollen auf den Boden des Frachtcontainers übertragen und dieser befördert.

Bei der aus der EP 0 391 175 A2 bekannten Rollenantriebseinheit läßt sich das Frachtgut lediglich vorwärts oder rückwärts bewegen. Rollenförderbahnen, die solche Rollenantriebseinheiten aufweisen, gestatten eine Beförderung des Frachtguts nur in eine durch die Ausrichtung der Antriebsrollen der Rollenantriebseinheit vorgegebene Richtung bzw. in die umgekehrte Richtung. Um das Frachtgut in geeigneter Weise im Frachtraum verstauen zu können, ist es daher in der Regel notwendig, daß das Frachtgut vom Bedienungspersonal manuell von der einen Rollenförderbahn auf die nächste Rollenförderbahn verschoben wird und hierdurch in den Bereich des für das betreffende Frachtgut vorgesehenen Stauraums gelangt. In diesem Bereich angelangt, muß das Frachtgut - wiederum manuell - zu dem ihm jeweils zugedachten Stauplatz befördert werden. Dadurch ist der Lade- bzw. Entladevorgang recht langwierig und damit insbesondere aufgrund der von der Verweilzeit des Flugzeuges auf dem Flughafen abhängigen Flughafengebühr auch teuer.

Vor diesem Hintergrund ist es wünschenswert eine Rollenantriebseinheit bzw. hieraus gebildete Rollenförderbahnen bereitzustellen, die das Frachtgut - weitgehend ohne manuelles Verschieben durch das Bedienungspersonal - an nahezu jede beliebige Stelle des Frachtraums befördern.

Die Schwierigkeiten bei der Konstruktion derartiger Rollenantriebseinheiten liegen zum einen darin, daß eine möglichst große Anpreßkraft der Antriebsrolle an den Boden des Containers erzeugt werden muß und daß andererseits eine Änderung der Förderrichtung der Rollenantriebseinheit sowohl bei abgesenkter als auch bei aufgestellter Antriebsrolle der Rollenantriebseinheit möglich sein soll. Weiterhin muß die Antriebsrolle unabhängig von der gewünschten Beförderungsrichtung des Containers beim Einschalten des Antriebsmotors der Antriebsrolle hochgeschwenkt werden und sich beim Abschalten des Motors wieder absenken. Trotz dieser verschiedenen, mechanisch nur schwer zu erfüllenden Forderungen, muß die Antriebseinheit kleinbauend und von geringem Gewicht sein, da dies für die hauptsächliche Verwendung in Luftfahrzeugen eine unabdingbare Voraussetzung ist. Da eine Vielzahl derartiger Rollenantriebseinheiten gleichzeitig in einer Förderbahn Verwendung findet, muß ihre Zuverlässigkeit besonders hoch sein. Der Ausfall bereits einer einzigen Rollenantriebseinheit kann zu einer Störung im Ladebetrieb führen.

Aus der EP 0497045 geht eine Rollenantriebseinheit für eine Förderbahn hervor, mit der sich das Frachtgut vorwärts oder rückwärts sowie um eine vertikale Achse verschwenken lässt. Es wirkt sich allerdings als sehr nachteilig aus, dass diese Rolleneinheit sehr schwer und wartungsanfällig ist, da für jede der notwendigen Bewegungen (Drehen der Rolle, Anheben und Absenken der Rolle sowie Verschwenken um eine vertikale Achse) gesonderte Motoren verwendet werden.

Der Erfindung liegt daher die Aufgabe zugrunde, eine zuverlässige und dennoch leichte Rollenantriebseinheit bereitzustellen, die in der Lage ist, Container in eine beliebige Richtung zu befördern.

Diese Aufgabe wird durch die im Patentanspruch 1 angegebenen Merkmale gelöst. Bevorzugte Ausführungsformen der Erfindung sind in den Unteransprüchen angegeben.

Ein wesentlicher Aspekt der Erfindung besteht darin, das Anheben und Andrücken der Antriebsrolle, deren Antrieb zur Beförderung des Frachtguts und das Verschwenken der Abtriebswelle in die gewünschte Förderrichtung mit einer möglichst geringen Anzahl an Antrieben, wie insbesondere Elektromotoren, zu realisieren. Erfindungsgemäß ist die Rollenantriebseinheit mit einem Getriebe, beispielsweise einem Planetengetriebe, versehen, dessen erste Abtriebswelle die Antriebsrolle zur Herstellung einer kraftschlüssigen Verbindung mit einem auf der Rollenantriebseinheit befindlichen Frachtcontainer aufstellt und dessen zweite Abtriebswelle das Trägerelement der Antriebsrolle und damit die Antriebsrolle um eine vertikale Achse in die durch eine automatische oder manuelle Steuereinrichtung vorgegebene Förderrichtung verschwenkt.

Bei der ersten Abtriebswelle des Planetengetriebes handelt es sich vorzugsweise um die Welle des Planetenradträgers und bei der zweiten Abtriebswelle vorzugsweise um das Hohlrad oder die Hohlwelle des Planetengetriebes. Je nach Anordnung des Planetengetriebes in der Rollenantriebseinheit, kann das Trägerelement der Antriebsrolle auch durch das Hohlrad des Planetengetriebes gebildet sein. Bei der Abtriebswelle des Planetengetriebes handelt es sich dann vorzugsweise um die Welle des Sonnenrads, die von einem ersten Elektromotor angetrieben wird. Der erste Elektromotor und/oder das Planetengetriebe ist vorzugsweise in geeigneter Weise innerhalb des verschwenkbaren Trägerelements angeordnet und treibt beim Verschwenken ein Ritzel an, das mit einem Zahnradsegment am Trägerelement kämmt.

Für die erfindungsgemäße Lösung, die die Verwendung eines Planetengetriebes für die Rollenantriebseinheit vorsieht, sind vorteilhafterweise lediglich zwei Motoren notwendig, um den Antrieb der Antriebsrolle, das Aufstellen und Andrücken der Antriebsrolle an einen zu befördernden Container und deren Verschwenken in die gewünschte bzw. durch die Steuereinrichtung vorgegebene Förderrichtung herbeizuführen.

Im Bereich der ersten und der zweiten Abtriebswelle des Planetengetriebes ist bei einer erfindungsgemäßen Ausgestaltung der Erfindung jeweils eine, vorzugsweise elektrisch separat betätigbare, Bremseinrichtung angeordnet. Hierdurch kann ein nicht benötigter Antrieb der ersten und/oder der zweiten Abtriebswelle durch ein Feststellen der Abtriebswelle unterbunden oder abgebremst werden.

Vorzugsweise ist in der Antriebsrolle, die an bzw. in einer nach oben und unten verschwenkbaren Schwenkhalterung drehbeweglich befestigt bzw. gelagert ist, ein zweiter Elektromotor vorgesehen, der die Antriebsrolle antreibt.

Ist in der Antriebsrolle ein Elektromotor für deren Antrieb angeordnet, so ist nach einer Ausgestaltung der Erfindung auch eine Getriebeeinheit, vorzugsweise mit mehreren Getriebestufen, für den Antrieb der Antriebsrolle über den Elektromotor in der Antriebsrolle vorgesehen.

Ebenso kann in der Antriebsrolle eine betätigbare Bremseinrichtung zum Feststellen oder Abbremsen der Antriebsrolle angeordnet werden.

Bei einer weiteren vorteilhaften Ausgestaltung der Erfindung ist in oder an der Antriebsrolle eine Einrichtung zur Messung der Containergeschwindigkeit eines von der Antriebsrolle beförderten Containers vorgesehen.

Alternativ oder ergänzend, kann die Antriebsrolle, vorzugsweise an einer ihrer Stirnflächen mit einem Zahnrad bzw. einem Ritzel und/oder einer Außenverzahnung und/oder mit einer Innenverzahnung versehen sein. Vorzugsweise ist dann weiterhin vorgesehen, an der Schwenkhalterung einen ebenfalls mit der Schwenkhalterung verschwenkbaren Elektromotor für den Antrieb der Antriebsrolle, vorzugsweise unter Zwischenschaltung eines (mehrstufigen) Getriebes, anzubringen.

Eine erste Meßeinrichtung zur Erfassung der Drehzahl bzw. der Geschwindigkeit der Antriebsrolle und/oder eine zweite Meßeinrichtung zur Erfassung der Andruckkraft mit der die Antriebsrolle in der betreffenden, aufgestellten Position gegen den Boden des zu befördernden Containers drückt, ist bei einer weiteren bevorzugten Ausführungsform der Erfindung vorgesehen.

Weitere erfinderische Merkmale ergeben sich aus der nachfolgenden Beschreibung einer bevorzugten Ausführungsform der Erfindung, die anhand von Abbildungen näher erläutert wird. Es zeigen:
- Fig. 1: eine schematisierte Darstellung einer erfindungsgemäßen Rollenantriebseinheit, teilweise im Vertikalschnitt;
- Fig. 2: eine schematisierte Darstellung der Rollenantriebseinheit in Fig. 1 in Draufsicht; und
- Fig. 3: ein Getriebe 30 mit zwei Antriebssträngen.

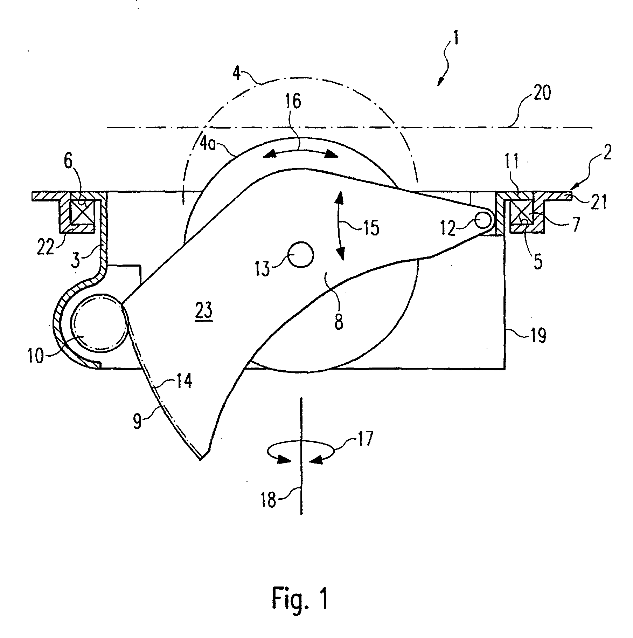

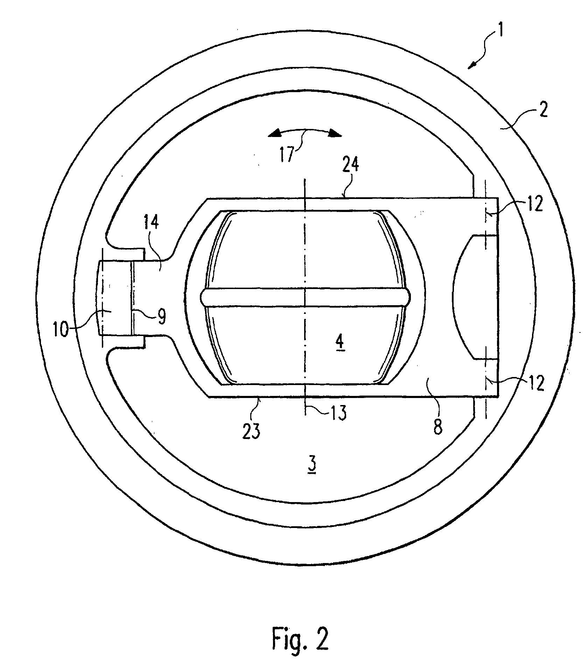

Die in den Figuren 1 und 2 dargestellte erfindungsgemäße Rollenantriebseinheit 1, bei der der Übersichtlichkeit halber eine an sich vorgesehene Abdeckung der Rollenantriebseinheit weggelassen worden ist, umfaßt ein ringförmiges Befestigungselement 2, ein Trägerelement 3 und eine Antriebsrolle 4 bzw. 4a.

Das ringförmige Befestigungselement 2 weist einen äußeren Kragen 21 auf, mit dessen Hilfe sich das Befestigungselement bzw. die Rollenantriebseinheit 1 einfach in einem Frachtraum, z.B. dem eines Flugzeuges, vorzugsweise in einer Öffnung im Boden des Frachtraums, montieren läßt. In das vorzugsweise ringförmige Befestigungselement 2 ist das Trägerelement 3, vorzugsweise oben bündig, eingebracht. Hierzu ist das Befestigungselement 2 mit einem inneren Kragen 22 versehen, der eine Auflagefläche 5 für das eingebrachte Trägerelement 3 bildet. Das Trägerelement 3, das vorzugsweise einen zylindrischen Hohlkörper 19 aufweist, ist seinerseits mit einem Flansch 11 versehen, dessen Unterseite eine Haltefläche 6 bildet, die, vorzugsweise über ein ringförmiges Rollenoder Wälzlager 7, auf dem inneren Kragen 22 des Befestigungselements 2 aufliegt. Dementsprechend läßt sich das Trägerelement 3 um eine vertikale Achse 18, um einen Winkel im Bereich von 0 bis 180 Grad oder im Bereich von 0 bis 90 Grad, in die gewünschte Förderrichtung des Frachtcontainers schwenken.

Hierzu weist das Trägerelement 3, vorzugsweise an oder in seinem weitgehend zylindrischen Hohlkörper 19, ein Zahnradsegment (nicht dargestellt) auf. Das Trägerelement 3 wird vorzugsweise von einem ersten Abtriebsstrang eines Planetengetriebes (nicht dargestellt) - wie vorstehend erläutert - steuerbar angetrieben, wobei das Schwenken sowohl bei abgesenkter (Ruheposition) Antriebsrolle 4a als auch aufgestellter (Arbeitsposition) Antriebsrolle 4 möglich ist.

Im verschwenkbaren Trägerelement 3 ist eine nach oben und unten verschwenkbare Schwenkhalterung 8 vorgesehen, was durch den Doppelpfeil mit dem Bezugszeichen 15 in Fig. 1 angedeutet ist. An ihrem einen Ende ist die Schwenkhalterung 8 am Trägerelement 3 angelenkt, wie durch das Bezugszeichen 12 in den Figuren 1 und 2 angegeben. An ihrem anderen, nach oben und unten verschwenkbaren Ende 14, ist die Schwenkhalterung 8 mit einem Zahnradsegment 9 versehen. Das Zahnradsegment 9 kämmt mit einem ebenfalls im oder am Trägerelement und/oder an der Schwenkhalterung 8 drehbeweglich angeordneten Ritzel 10, das vorzugsweise vom zweiten Abtriebsstrang des Planetengetriebes (nicht dargestellt) - wie vorstehend erläutert - steuerbar angetrieben wird und bei seinem Antrieb, in Abhängigkeit von der Drehrichtung des Ritzels 10, die Schwenkhalterung 8 über das Zahnradsegment 9 nach oben in eine von mehreren Arbeitspositionen der Antriebsrolle 4 oder nach unten in die einzige Ruheposition der Antriebsrolle 4a bringt. Soll der Andruck der Antriebsrolle gegen den Boden eines auf der Transportebene 20 über der Antriebsrolle 4 befindlichen Containers erhöht werden, so wird die Antriebsrolle 4 über das Antriebsritzel 10, das Zahnradsegment 9 und die Schwenkhalterung 8 von einer ersten, tiefer gelegenen Arbeitsposition oberhalb der Transportebene 20 in eine zweite höher gelegene Arbeitsposition oberhalb der Transportebene 20 gebracht.

Die Schwenkhalterung 8 weist zwei gegenüberliegende, nierenförmige Wangenflächen 23 und 24 auf, die an ihrem ersten, am Trägerelement 3 angelenkten Ende und an ihrem jeweils ein Zahnradsegment 9 aufweisenden zweiten Ende über Stege miteinander verbunden sind, so daß eine Aussparung zur, vorzugsweise mittigen, Aufnahme der Antriebsrolle 4 entsteht. Quer zur Schwenkachse der Schwenkhalterung 8 ist eine Achse oder Welle (nicht dargestellt) zwischen den beiden Wangenflächen 23 und 24 angeordnet, die die Antriebsrolle 4 (gelagert) trägt, so daß diese von einem Motor (nicht dargestellt) - wie vorstehend erläutert - sich vorwärts bzw. rückwärts um die Drehachse 13 drehend angetrieben werden kann.

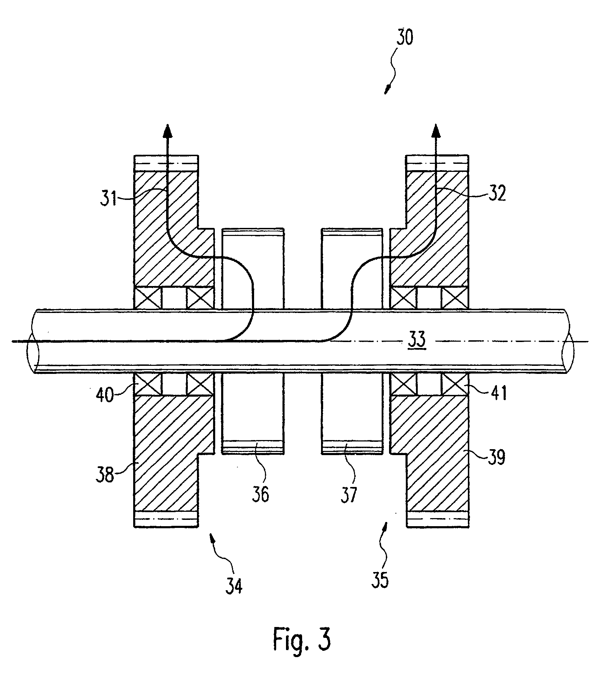

Anstelle eines Planetengetriebes kann beispielsweise auch ein anderes Getriebe mit zwei Antriebssträngen verwendet werden. Ein Beispiel hierfür ist das in Fig. 3 dargestellte Getriebe 30, das einen ersten Antriebsstrang 31 und einen zweiten Antriebsstrang 32 aufweist. Auf einer (gegebenenfalls verlängerten) Motorwelle 33 eines Elektromotors (nicht dargestellt) sind zwei Antriebseinheiten 34 und 35 angeordnet, die unabhängig voneinander drehbeweglich sind. Die erste Antriebseinheit 34 umfaßt ein Antriebsritzel 38, ein Drehlager 40 und eine Kupplung 36, wobei das Antriebsritzel 38 und die Kupplung 36 über das Drehlager 40 auf der Motorwelle 33 drehbeweglich gelagert sind. Ebenso weist die zweite Antriebseinheit 35 ein Antriebsritzel 39, ein Drehlager 40 und eine Kupplung 37 auf, wobei das Antriebsritzel 39 und die Kupplung 37 über das Drehlager 40 auf der Motorwelle 33 drehbar gelagert sind. Durch Betätigung der Kupplung 36 und/oder 37 kann wahlweise eine kraftschlüssige Verbindung zwischen der Motorwelle 33 und und dem Antriebsstrang 31 und/oder dem zweiten Antriebsstrang 32 hergestellt werden. Wird ein solches Getriebe beispielsweise zum Betrieb der beschriebenen Rollenantriebseinheit benutzt, so kann beispielsweise der Antriebsstrang 31 zum steuerbaren Antrieb des Trägerelements 3 und der Antriebsstrang 32 zum steuerbaren Antrieb des Ritzels 10 verwendet werden.

Es versteht sich, daß anstelle von nierenförmigen Wangenflächen 23 und 24 auch Wangenflächen verwendet werden können, die eine (gleichwirkende) andere Form haben.

### Bezugszeichenliste

- 1: Rollenantriebseinheit
- 2: ringförmiges Befestigungselement
- 3: verschwenkbares Trägerelement der Antriebsrolle
- 4: Antriebsrolle in aufgestellter Arbeitsposition
- 4a: Antriebsrolle in abgesenkter Ruheposition
- 5: Auflagefläche des Befestigungselements 2
- 6: Haltefläche des Trägerelements 3
- 7: ringförmiges Wälzlager
- 8: nach oben und unten verschwenkbare Schwenkhalterung
- 9: Zahnradsegment der Schwenkhalterung
- 10: Antriebsritzel zum Aufstellen der Antriebsrolle 4
- 11: Flansch des Trägerelements 3
- 12: Bezugszeichen, das die einseitige Anlenkung der Schwenkhalterung 8 am Trägerelement 3 zeigt
- 13: Drehachse der in der Schwenkhalterung 8 befestigten Antriebsrolle 4
- 14: verschwenkbares Ende der Schwenkhalterung, das mit mindestens einem Zahnradsegment 9 versehen ist
- 15: Doppelpfeil, der die Bewegung der Antriebsrolle von der Ruheposition in die Arbeitsposition und umgekehrt andeutet
- 16: Doppelpfeil, der die beiden Drehrichtungen der Antriebsrolle 4 zur Beförderung von Frachtgut andeutet
- 17: Doppelpfeil, der die Schwenkbewegung des um eine vertikale Achse 18 verschwenkbaren Trägerelements 3 und damit der Antriebsrolle 4 andeutet
- 18: Schwenkachse des Trägerelements 3
- 19: zylindrischer Hohlkörper des Trägerelements 3
- 20: Transportebene
- 21: äußerer Kragen des ringförmigen Befestigungselements 2
- 22: innerer Kragen des ringförmigen Befestigungselements 2
- 23: erste nierenförmige Wangenfläche der Schwenkhalterung 8
- 24: zweite nierenförmige Wangenfläche der Schwenkhalterung 8
- 30: Getriebe
- 31: Antriebsstrang
- 32: Antriebsstrang
- 33: Motorwelle
- 34: Antriebseinheit
- 35: Antriebseinheit
- 36: Kupplung
- 37: Kupplung
- 38: Antriebsritzel
- 39: Antriebsritzel
- 40: Drehlager
- 41: Drehlager

## Patentansprüche

1. Rollenantriebseinheit (1) mit einer absenk- und aufstellbaren Antriebsrolle (4, 4a) zum Transport von Frachtbehältern in verschiedene Richtungen, umfassend
ein im wesentlichen ringförmiges Befestigungselement (2) zur Befestigung der Rollenantriebseinheit (1) am Boden eines Frachtraumes und zur Aufnahme eines um eine vertikale Achse (18) im Befestigungselement (2) schwenkbaren Trägerelements (3) der Antriebsrolle (4) und mit einem Getriebe (30),
**dadurch gekennzeichnet, daß**
eine erste Abtriebswelle des Getriebes (30) die Antriebsrolle (4) zur Herstellung einer kraftschlüssigen Verbindung mit einem auf der Rollenantriebseinheit befindlichen Frachtcontainer aufstellt und daß eine zweite Abtriebswelle des Getriebes (30) das Trägerelement (3) der Antriebsrolle (4) um die vertikale Achse (18) im Befestigungselement (2) verschwenkt.

2. Rollenantriebseinheit nach Anspruch 1, **dadurch gekennzeichnet, daß** das Befestigungselement (2) eine Auflagefläche (5) zur Auflage einer Haltefläche (6) des im Befestigungselement (2) verschwenkbaren Trägerelements (3) der Antriebsrolle (4) aufweist.

3. Rollenantriebseinheit nach Anspruch 2, **dadurch gekennzeichnet, daß** zwischen der Auflagefläche (5) und der Haltefläche (6) ein ringförmiges Rollen- oder Wälzlager (7) angeordnet ist.

4. Rollenantriebseinheit nach Anspruch 2 oder 3, **dadurch gekennzeichnet, daß** das Trägerelement (3) der Antriebsrolle (4) einen mit einem Flansch (11) versehenen, vorzugsweise zylindrischen, Hohlkörper aufweist und die Unterseite des Flansches die Haltefläche (6) des Trägerelements (3) im Befestigungselement (2) bildet.

5. Rollenantriebseinheit nach einem der Ansprüche 1 bis 4, **dadurch gekennzeichnet, daß** im Trägerelement (3) einseitig (Position 12) an diesem eine nach oben und unten verschwenkbare Schwenkhalterung (8) zum Aufstellen der Antriebsrolle (4) angelenkt ist, in oder an der die Antriebsrolle (4) drehbeweglich (Achse 13) befestigt ist.

6. Rollenantriebseinheit nach Anspruch 5, **dadurch gekennzeichnet, daß** die Schwenkhalterung (8), vorzugsweise an ihrem verschwenkbaren Ende (14), mindestens ein Zahnradsegment (9) aufweist, das mit einem Antriebsritzel (10) zum Aufstellen der Antriebsrolle (4) kämmt.

7. Rollenantriebseinheit nach einem der Ansprüche 1 bis 6, **dadurch gekennzeichnet, daß** die erste Abtriebswelle von einem ersten Elektromotor angetrieben ist.

8. Rollenantriebseinheit nach einem der Ansprüche 1 bis 7, **dadurch gekennzeichnet, daß** im Bereich der ersten und/oder der zweiten Abtriebswelle ein oder mehrere separat betätigbare Abtriebs-Bremseinrichtungen vorgesehen sind, die jeweils einen nicht benötigten Antrieb durch die erste und/oder zweite Abtriebswelle unterbinden oder abbremsen.

9. Rollenantriebseinheit nach einem der Ansprüche 1 bis 8, **dadurch gekennzeichnet, daß** in oder an der Antriebsrolle (4) ein zweiter Elektromotor vorgesehen ist, der die Antriebsrolle (4) antreibt.

10. Rollenantriebseinheit nach Anspruch 9, **dadurch gekennzeichnet, daß** in oder an der Antriebsrolle (4) für deren Antrieb über den zweiten Elektromotor eine Getriebeeinheit, vorzugsweise eine Getriebeeinheit mit mehreren Getriebestufen, vorgesehen ist.

11. Rollenantriebseinheit nach einem der Ansprüche 1 bis 10, **dadurch gekennzeichnet, daß** in oder an der Antriebsrolle (4) eine betätigbare Bremseinrichtung zum Feststellen der Antriebsrolle vorgesehen ist.

12. Rollenantriebseinheit nach einem der Ansprüche 1 bis 11, **dadurch gekennzeichnet, daß** in oder an der Antriebsrolle (4) eine Einrichtung zur Messung der Containergeschwindigkeit eines von der Antriebsrolle beförderten Containers vorgesehen ist.

13. Rollenantriebseinheit nach einem der Ansprüche 1 bis 12, **gekennzeichnet durch** eine erste Meßeinrichtung zur Erfassung der Drehzahl bzw. der Geschwindigkeit der Antriebsrolle (4).

14. Rollenantriebseinheit nach einem der Ansprüche 1 bis 13, **gekennzeichnet durch** eine zweite Meßeinrichtung zur Erfassung der Andruckkraft mit der die Antriebsrolle (4) in der betreffenden, aufgestellten Arbeitsposition gegen den Boden des zu befördernden Containers drückt.

15. Rollenantriebseinheit nach einem der Ansprüche 1 bis 14, **gekennzeichnet durch** eine Regeleinrichtung zum Regeln der Andruckkraft und/oder der Drehzahl bzw. Geschwindigkeit der Antriebsrolle (4) zur Vermeidung von Schlupf zwischen Antriebsrolle (4) und Container.

## Claims

1. Roller drive unit (1) having a driving roller (4, 4a) that can be raised and lowered for transporting freight receptacles in different directions, the said unit comprising
a substantially annular fastening element (2) for fastening the roller drive unit (1) to the floor of a freight compartment and for receiving a carrier element (3) of the driving roller (4), which carrier element can be pivoted about a vertical axis (18) in the said fastening element (2), and having a gear train (30),
**characterised in that** a first output shaft of the gear train (30) raises the driving roller (4) for the purpose of producing a force-locking connection with a freight container located on the roller drive unit, and that a second output shaft of the gear train (30) swivels the carrier element (3) of the driving roller (4) about the vertical axis (18) in the fastening element (2).

2. Roller drive unit according to claim 1,
**characterised in that** the fastening element (2) has a supporting face (5) for supporting a retaining face (6) of the carrier element (3) of the driving roller (4), which carrier element can be swivelled in the said fastening element (2).

3. Roller drive unit according to claim 2,
**characterised in that** an annular roller or rolling bearing (7) is disposed between the supporting face (5) and the retaining face (6).

4. Roller drive unit according to claim 2 or 3,
**characterised in that** the carrier element (3) of the driving roller (4) has a preferably cylindrical hollow body provided with a flange (11), and the underside of the said flange forms the retaining face (6) of the carrier element (3) in the fastening element (2).

5. Roller drive unit according to one of claims 1 to 4,
**characterised in that**, in the carrier element (3), there is articulated on the latter, on one side (position 12), an upwardly and downwardly swivellable pivoting mounting arrangement (8) for raising the driving roller (4), in or on which the said driving roller (4) is mounted in a rotationally movable manner (spindle 13).

6. Roller drive unit according to claim 5,
**characterised in that** the pivoting mounting arrangement (8) has, preferably at its swivellable end (14), at least one toothed-wheel segment (9) which meshes with a driving pinion (10) for the purpose of raising the driving roller (4).

7. Roller drive unit according to one of claims 1 to 6,
**characterised in that** the first output shaft is driven by a first electric motor.

8. Roller drive unit according to one of claims 1 to 7,
**characterised in that** there are provided, in the region of the first and/or second output shaft, one or more separately actuatable output-braking apparatuses which, in each case, put an end to, or retard unnecessary driving by the first and/or second output shaft.

9. Roller drive unit according to one of claims 1 to 8,
**characterised in that** a second electric motor, which drives the driving roller (4), is provided in or on the said driving roller (4).

10. Roller drive unit according to claim 9,
**characterised in that** a gear unit, preferably a gear unit having a number of gear stages, is provided in or on the driving roller (4) for driving the latter via the second electric motor.

11. Roller drive unit according to one of claims 1 to 10,
**characterised in that** an actuatable braking apparatus for arresting the driving roller is provided in or on the said driving roller (4).

12. Roller drive unit according to one of claims 1 to 11,
**characterised in that** an apparatus for measuring the speed of a container which is being conveyed by the driving roller is provided in or on the said driving roller (4).

13. Roller drive unit according to one of claims 1 to 12,
**characterised by** a first measuring apparatus for detecting the number of revolutions or speed of the driving roller (4).

14. Roller drive unit according to one of claims 1 to 13,
**characterised by** a second measuring apparatus for detecting the contact pressure with which the driving roller (4) presses, when in the raised working position in question, against the bottom of the container to be conveyed.

15. Roller drive unit according to one of claims 1 to 14,
**characterised by** a regulating apparatus for regulating the contact pressure and/or the number of revolutions or speed of the driving roller (4) for the purpose of avoiding slip between the driving roller (4) and the container.

## Revendications

1. Unité d'entraînement à rouleau (1) comportant un rouleau d'entraînement (4, 4a) pouvant être abaissé et relevé pour le transport de conteneurs de fret dans différentes directions, comprenant
un élément de fixation (2) sensiblement de forme annulaire pour la fixation de l'unité d'entraînement à rouleau (1) sur le plancher d'un local de fret et pour recevoir un élément de support (3), pouvant pivoter autour d'un axe vertical (18) dans l'élément de fixation (2) du rouleau d'entraînement (4), et avec une transmission (30),
**caractérisée en ce qu'**un premier arbre de sortie de la transmission (30) redresse le rouleau d'entraînement (4) pour réaliser une liaison par force avec un conteneur de fret se trouvant sur l'unité d'entraînement à rouleau, et **en ce qu'**un deuxième arbre de sortie de la transmission (30) fait pivoter l'élément de support (3) du rouleau d'entraînement (4) autour de l'axe vertical (18), dans l'élément de fixation (2).

2. Unité d'entraînement à rouleau selon la revendication 1, **caractérisée en ce que** l'élément de fixation (2) comporte une surface d'appui (5) pour l'appui d'une surface de maintien (6) de l'élément de support (3), pouvant pivoter dans l'élément de fixation (2), du rouleau d'entraînement (4).

3. Unité d'entraînement à rouleau selon la revendication 2, **caractérisée en ce qu'**un palier à rouleau ou palier de roulement (7) en forme d'anneau est disposé entre la surface d'appui (5) et la surface de maintien (6).

4. Unité d'entraînement à rouleau selon la revendication 2 ou 3, **caractérisée en ce que** l'élément de support (3) du rouleau d'entraînement (4) comporte un corps creux de préférence cylindrique, pourvu d'une bride (11), et la face inférieure de la bride forme la surface de maintien (6) de l'élément de support (3) dans l'élément de fixation (2).

5. Unité d'entraînement à rouleau selon l'une des revendications 1 à 4, **caractérisée en ce que** dans l'élément de support (3) est articulé d'un côté (position 12) sur celui-ci, un support de pivotement (8) pouvant pivoter vers le haut et vers le bas, pour le redressement du rouleau d'entraînement (4), dans ou sur lequel est fixé le rouleau d'entraînement (4) de manière mobile en rotation (axe 13).

6. Unité d'entraînement à rouleau selon la revendication 5, **caractérisée en ce que** le support de pivotement (8) comporte, de préférence à son extrémité (14) pivotante, au moins un segment de roue dentée (9) qui engrène avec un pignon d'entraînement (10) pour le redressement du rouleau d'entraînement (4).

7. Unité d'entraînement à rouleau selon l'une des revendications 1 à 6, **caractérisée en ce que** le premier arbre de sortie est entraîné par un premier moteur électrique.

8. Unité d'entraînement à rouleau selon l'une des revendications 1 à 7, **caractérisée en ce que**, dans la zone du premier et/ou du deuxième arbre de sortie, sont prévus un ou plusieurs dispositifs de freinage de sortie à actionnement séparé, qui empêchent un entraînement non nécessaire par le premier et/ou le deuxième arbre de sortie, ou le freinent.

9. Unité d'entraînement à rouleau selon l'une des revendications 1 à 8, **caractérisée en ce que**, dans ou sur le rouleau d'entraînement (4), est prévu un deuxième moteur électrique qui entraîne le rouleau d'entraînement (4).

10. Unité d'entraînement à rouleau selon la revendication 9, **caractérisée en ce que**, dans ou sur le rouleau d'entraînement (4) est prévu, pour son entraînement par l'intermédiaire du deuxième moteur électrique, une unité de transmission de préférence une unité de transmission à plusieurs étages de transmission.

11. Unité d'entraînement à rouleau selon l'une des revendications 1 à 10, **caractérisée en ce que**, dans ou sur le rouleau d'entraînement (4), est prévu un dispositif de freinage pouvant être actionné pour bloquer le rouleau d'entraînement.

12. Unité d'entraînement à rouleau selon l'une des revendications 1 à 11, **caractérisée en ce que** dans ou sur le rouleau d'entraînement (4) est prévu un dispositif de mesure de la vitesse d'un conteneur transporté par le dispositif d'entraînement.

13. Unité d'entraînement à rouleau selon l'une des revendications 1 à 12, **caractérisée par** un premier dispositif de mesure pour détecter la vitesse de rotation ou la vitesse du rouleau d'entraînement (4).

14. Unité d'entraînement à rouleau selon l'une des revendications 1 à 13, **caractérisée par** un deuxième dispositif de mesure pour détecter la force de pression par laquelle le rouleau d'entraînement (4), dans sa position de travail relevée concernée, presse contre le fond du conteneur à transporter.

15. Unité d'entraînement à rouleau selon l'une des revendications 1 à 14, **caractérisée par** un dispositif de régulation pour la régulation de la force de pression et/ou la vitesse de rotation ou la vitesse du rouleau d'entraînement (4) pour éviter un glissement entre le rouleau d'entraînement (4) et le conteneur.
